# EUROPEAN PATENT SPECIFICATION

(11) **EP 0 646 489 B1**
(45) Date of publication and mention of the grant of the patent: **03.12.1997**
(21) Application number: 94202620.4
(22) Date of filing: 12.09.1994
(51) Int. Cl.: B60N 2/22

(54) **Recliner seat for a vehicle**
Verstellbarer Fahrzeugsitz
Siège inclinable pour véhicule

(30) Priority: 04.10.1993 US 131247
(43) Date of publication of application: 05.04.1995
(73) Proprietor: GENERAL MOTORS CORPORATION, Detroit Michigan 48202 (US)
(72) Inventor: Miller, Harold John, Mt Clemens, Michigan 48043 (US); Clancy, Edward William, III, Livonia, Michigan 48154 (US)
(74) Representative: Denton, Michael John

(56) References cited:
- FR-A- 2 133 425
- GB-A- 1 421 912
- US-A- 3 832 003
- US-A- 5 149 171
- US-A- 5 163 735

## Description

The present invention relates to a recliner seat for a vehicle and to a method of limiting inclination of a back rest of a recliner seat.

Most of the design restraints associated with vehicle seating are primarily concerned with preventing the vehicle seat from moving forward in a frontal impact crash. However, sometimes it is desirable to prevent the back rests of the front seats from moving rearwardly. At present, the main factor which prevents rearward movement of the back rest is the structural integrity of the seat. Preventing possible rearward motion of a seat is harder to obtain when utilising a reclining seat, in which seat back rest can be reclined rearwardly. US-A-5163735 describes a recliner seat in accordance with the preamble of claim 1.

The present invention seeks to provide an improved recliner seat and method of limiting the inclination of the back rest of a recliner seat.

A recliner seat in accordance with the present invention is characterised over US-A-5163735 by the features specified in the characterising portion of claim 1.

A preferred embodiment includes a vehicle seat with an auxiliary strut having a fixed pivotal connection with either the back rest member or the seat member and a lost motion pivotal connection with the other member. In situations where the vehicle encounters a rear impact, the lost motion pivotal attachment is latched, thereby causing both ends of the strut to have fixed pivotal axes with the back rest member and the seat member, thereby hindering any further rearward motion of the back rest member. However, in normal operation, the strut allows movement of the back rest rearwardly with respect to the seat member with virtually no interference.

An embodiment of the present invention is described below, by way of example only, with reference to the accompanying drawings, in which:
Figure 1 is a perspective view of a preferred embodiment of recliner seat;
Figure 2 is an enlarged view of the seat shown in Figure 1 with a portion of the seat omitted for clarity of illustration; and
Figure 3 is a perspective view of an alternative embodiment of strut for use in the seat of Figure 1.

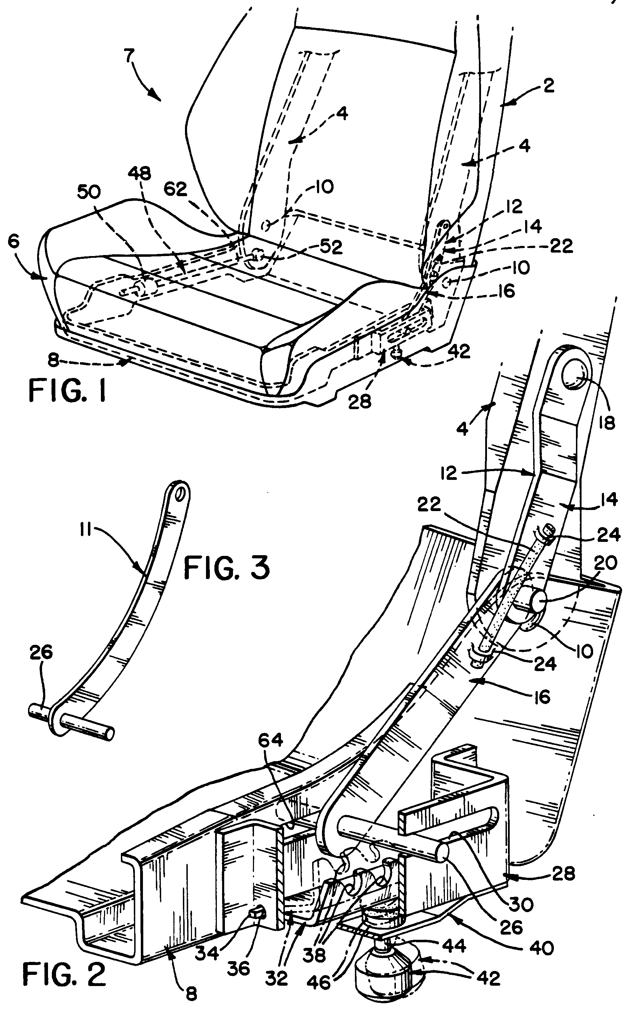

Referring to Figures 1, 2 and 3, a preferred embodiment of seat 7 includes a back rest member 2 having a generally inverted U-shaped back rest frame 4. The back rest frame 4 is pivotably connected to a frame 8 of a seat member 6 at a fixed pivotal axis by pins 10. In order to adjust the inclination of the back rest frame 4 with respect to the seat frame 8, there is a linear adjuster actuator 48 having an actuator 50 which is manually or power actuated and an end 62 which is pivotally connected by a pin 52 to the back rest frame 4.

A strut 12 is provided, having a first upper rigid link 14 and a second rigid lower link 16. The strut 12 is typically hidden from view by cushion material which also covers the seat frames 4 and 8. In many instances, the strut 12 will be located on the inboard side of the seat 7, that is at the side of the seat furthest from the sides of the vehicle. Link 14 at its upper end is pivotably attached at a fixed pivotal axis to the back rest frame 4 by a pin 18. The upper link 14 is pivotably connected by a pin 20 to the lower link 16. A spring member 22 held in grips 24 of the upper and lower links and pressed against the pin 20 biases the links 14 and 16 into a bent position, as shown.

The lower end of lower link 16 is fixed to a cross pin 26. The cross pin 26 rides in a linear groove 30 provided in a C-channel 28 and in a groove 64 located within the seat frame 8. Underneath the cross pin 26 is a latch plate 32 having serrated recesses or indentations 38. The latch plate 32 has studs 34 (only one shown) which allow it to be pivotably mounted in apertures 36 (only one shown) in the C-channel 28. Underneath the latch 32 is a pendulum 42, weighing approximately 10 grams in this example and having a stem 44 connected to a button 46. The pendulum button 46 is supported on a platform 40 which is, in turn, suspended from the lower side of the C-channel 28.

During normal operation, a seat occupant, via an actuator 50 will either extend or retract the actuator 48 to adjust the inclination of the back rest frame 4. The pin in the lower strut link 16 will slide freely within the oblong grooves 64 and 30. There will be virtually no effect upon the operation of the recliner mechanism by the strut 12.

In instances of a rapid forward acceleration of the vehicle in the range of 19.5 m/sec² (64 ft/sec², typically exceeded in a rear impact), the pendulum 42 will swing to the position shown in phantom. The pivoting of the pendulum 42 causes the button 46 to tilt and thereby to lift up the bottom of the latch 32 to the position shown in phantom, until one of the indentations 38 engages the pin 26. At this point, the bottom link 16 will have a fixed pivotal connection with the seat frame 8. Continued rearward motion of the back rest will be limited at the point where the upper link 14 and the lower link 16 are aligned straight with one another, making a three-sided truss with respect to pins 26, 18 and 10. When this point is reached, further rearward motion of the back rest frame 4 is hindered and can only occur by elastic deformation of the strut 12 and/or the back rest frame 4 or the seat frame 8. It is possible to chose the rearward acceleration of the vehicle (or seat) which will actuate the latch 32, by appropriate choice of the weight of the pendulum 42.

Referring to Figure 3, an alternative embodiment of strut 11 is shown, this being a single curved member rather than two separate links. This configuration may be found to be preferable since it is easy to hide the single strut member within the seat cushioning.

## Claims

1. A recliner seat for a vehicle comprising a seat frame member (8); a back rest frame member (4) pivotably mounted with respect to the seat frame member; adjusting means (48) operative to adjust the inclination of the back rest frame member with respect to the seat frame member; a strut (12) pivotably mounted to one of the seat and back rest frame members at a fixed pivotal axis; and latch actuation means (42); characterised in that the strut (12) includes means (26) of lost motion pivotal attachment with the other frame member; and in that the latch actuation means (42) is operative to cause latch means (32) to prevent translational movement of the pivotal attachment of the strut with the other of the seat and back rest frame members so as to cause the strut to tend to limit rearward inclination of the back rest frame member when acceleration of the seat in a forward direction relative to the seat exceeds a predetermined acceleration level.

2. A recliner seat according to claim 1, wherein the lost motion pivotal attachment means includes a pin (26) fixed to the strut and engageable to the latch means on actuation of the latch means.

3. A recliner seat according to claim 2, comprising guide means (30) on the other of the seat and back rest frame members for guiding movement of the pin.

4. A recliner seat according to claim 2 or 3, wherein the latch means is movable towards the pin so as to engage the pin to prevent or limit movement of the pin and thereby of the strut when the latch means is actuated by the latch actuation means.

5. A recliner seat according to any preceding claim, wherein the latch actuation means includes a pendulum (42) movable on acceleration of the seat beyond the predetermined acceleration level so as to actuate the latch means.

6. A recliner seat according to any preceding claim, wherein the fixed pivotal axis to which the strut is mounted is on the back rest frame.

7. A recliner seat according to any preceding claim, wherein the strut is formed of one member.

8. A recliner seat according to any one of claims 1 to 6, wherein the strut is formed from two members (14,16) pivotably connected to one another.

9. A recliner seat according to claim 8, wherein the strut includes a spring (22) operative to bias the two members to an angle relative to one another and thereby the strut into a bent position.

## Patentansprüche

1. Verstellbarer Sitz für ein Fahrzeug umfassend ein Sitzrahmenelement (8); ein Rückenlehnenrahmenelement (4), das bezüglich des Sitzrahmenelements schwenkbar befestigt ist; ein Einstellmittel (48), das dazu dient, die Neigung des Rückenlehnenrahmenelements bezüglich des Sitzrahmenelements einzustellen; eine Strebe (12), die an dem einen von dem Sitz- und Rückenlehnenrahmenelementen bei einer festen Schwenkachse schwenkbar befestigt ist; und ein Klinkenbetätigungsmittel (42); dadurch gekennzeichnet, daß die Strebe (12) ein Mittel (26) einer Totgangschwenkanbringung an dem anderen Rahmenelement umfaßt; und dadurch, daß das Klinkenbetätigungsmittel (42) dazu dient, zu veranlassen, daß das Klinkenmittel (32) eine Translationsbewegung der Schwenkanbringung der Strebe an dem anderen der Sitz- und Rückenlehnenrahmenelemente verhindert, um zu veranlassen, daß die Strebe dazu neigt, die Neigung des Rückenlehnenrahmenelements nach hinten zu begrenzen, wenn die Beschleunigung des Sitzes in einer Richtung nach vorne relativ zu dem Sitz einen vorbestimmten Beschleunigungspegel überschreitet.

2. Verstellbarer Sitz nach Anspruch 1, worin das Totgangschwenkanbringungsmittel einen Stift (26) umfaßt, der an der Strebe fixiert ist und mit dem Klinkenmittel bei Betätigung des Klinkenmittels in Eingriff treten kann.

3. Verstellbarer Sitz nach Anspruch 2 umfassend ein Führungsmittel (30) an dem anderen von den Sitz- und Rückenlehnenrahmenelementen zum Führen der Bewegung des Stiftes.

4. Verstellbarer Sitz nach Anspruch 2 oder 3, worin das Klinkenmittel in Richtung des Stiftes bewegbar ist, um mit dem Stift in Eingriff zu treten und somit eine Bewegung des Stiftes und dadurch der Strebe zu verhindern oder zu begrenzen, wenn das Klinkenmittel durch das Klinkenbetätigungsmittel betätigt wird.

5. Verstellbarer Sitz nach einem der vorhergehenden Ansprüche, worin das Klinkenbetätigungsmittel ein Pendel (42) umfaßt, das bei Beschleunigung des Sitzes über den vorbestimmten Beschleunigungspegel hinaus bewegbar ist, um das Klinkenmittel zu betätigen.

6. Verstellbarer Sitz nach einem der vorhergehenden Ansprüche, worin die feste Schwenkachse, an welcher die Strebe befestigt ist, sich an dem Rückenlehnenrahmen befindet.

7. Verstellbarer Sitz nach einem der vorhergehenden Ansprüche, worin die Strebe aus einem Element gebildet ist.

8. Verstellbarer Sitz nach einem der Ansprüche 1 bis 6, worin die Strebe aus zwei Elementen (14, 16) gebildet ist, die schwenkbar miteinander verbunden sind.

9. Verstellbarer Sitz nach Anspruch 8, worin die Strebe eine Feder (22) umfaßt, die dazu dient, die zwei Elemente unter einem Winkel relativ zueinander und dadurch die Strebe in eine gebogene Position vorzuspannen.

## Revendications

1. Siège inclinable pour véhicule comprenant un élément (8) formant cadre de siège; un élément (4) formant dossier monté à rotation sur l'élément formant cadre de siège; un moyen de réglage (48) opérant pour régler l'inclinaison de l'élément formant cadre de dossier par rapport à l'élément formant cadre de siège; une barre (12) montée à rotation sur un des éléments formant cadres de siège et de dossier suivant un axe de rotation fixe; et un moyen (42) de commande de dispositif de blocage; caractérisé en ce que la barre (12) comprend un moyen (26) de fixation rotatoire à déplacement libre à l'autre élément formant cadre; et en ce que le moyen (42) de commande de dispositif de blocage est opérant pour commander le moyen de blocage (32) pour qu'il empêche le mouvement de translation du dispositif de fixation rotatoire de la barre avec l'autre des éléments formant cadres de siège et de dossier de manière à commander la barre pour limiter l'inclinaison vers l'arrière de l'élément formant cadre de dossier lorsque l'accélération du siège vers l'avant par rapport au siège dépasse un niveau d'accélération prédéterminé.

2. Siège inclinable selon la revendication 1, dans lequel le moyen de fixation rotatoire à déplacement libre comprend une tige (26) fixée à la barre et qui peut s'engager avec le moyen de blocage lors de la commande du moyen de blocage.

3. Siège inclinable selon la revendication 2, comprenant un moyen de guidage (30) sur l'autre des éléments formant cadres de siège et de dossier pour guider le mouvement de la tige.

4. Siège inclinable selon la revendication 2 ou 3, dans lequel le moyen de blocage est mobile en direction de la tige de manière à s'engager avec la tige pour empêcher ou limiter le mouvement de la tige et par conséquent de la barre lorsque le moyen de blocage est commandé par le moyen de commande de dispositif de blocage.

5. Siège inclinable selon l'une quelconque des revendications précédentes, dans lequel le moyen de commande de dispositif de blocage comprend un pendule (42) mobile lors de l'accélération du siège au-delà du niveau d'accélération prédéterminé de manière à commander le moyen de blocage.

6. Siège inclinable selon l'une quelconque des revendications précédentes, dans lequel l'axe de rotation fixe, sur lequel est montée la barre, se trouve sur le cadre de dossier.

7. Siège inclinable selon l'une quelconque des revendications précédentes, dans lequel la barre est formée d'un seul élément.

8. Siège inclinable selon l'une quelconque des revendications 1 à 6, dans lequel la barre est formée de deux éléments (14, 16) raccordés à rotation l'un à l'autre.

9. Siège inclinable selon la revendication 8, dans lequel la barre comprend un ressort (22) opérant pour solliciter les deux éléments pour faire un angle l'un par rapport à l'autre et par conséquent la barre pour l'amener dans une position incurvée.
